# EUROPÄISCHE PATENTSCHRIFT

(11) **EP 2 686 653 B1**
(45) Veröffentlichungstag und Bekanntmachung des Hinweises auf die Patenterteilung: **08.04.2015**
(21) Anmeldenummer: 12702849.6
(22) Anmeldetag: 10.02.2012
(51) Int. Cl.: B23K 26/20, B23K 26/32, C04B 35/111, G01L 9/00, C04B 37/00

(54) **KERAMISCHE DRUCKMESSZELLE UND VERFAHREN ZU IHRER HERSTELLUNG**
CERAMIC PRESSURE SENSOR AND METHOD FOR PRODUCING SAME
CELLULE MANOMÉTRIQUE EN CÉRAMIQUE ET PROCÉDÉ DE FABRICATION DE LADITE CELLULE MANOMÉTRIQUE EN CÉRAMIQUE

(30) Priorität: 16.03.2011 DE 102011005665
(43) Veröffentlichungstag der Anmeldung: 22.01.2014
(73) Patentinhaber: Endress+Hauser GmbH+Co. KG, 79689 Maulburg (DE)
(72) Erfinder: DREWES, Ulfert, 79379 Müllheim (DE); ROßBERG, Andreas, 79713 Bad Säckingen (DE); SCHMIDT, Elke, 79713 Bad Säckingen (DE); BERLINGER, Andrea, 76532 Baden-Baden (DE); UEHLIN, Thomas, 79650 Schopfheim (DE)
(74) Vertreter: Andres, Angelika Maria
(86) Internationale Anmeldenummer: PCT/EP2012/052310
(87) Internationale Veröffentlichungsnummer: WO 2012/123199

(56) Entgegenhaltungen:
- EP-A2- 0 490 807
- WO-A1-2009/155716
- DE-A1-102007 047 014
- US-A- 5 407 119

## Beschreibung

Die vorliegende Erfindung betrifft eine keramische Druckmesszelle und ein Verfahren zu ihrer Herstellung:
Gattungsgemäße keramische Druckmesszellen umfassen einen keramischen Grundkörper und eine keramische Messmembran, wobei der Grundkörper und die Messmembran unter Bildung einer Messkammer zwischen dem Grundkörper und der Messmembran mittels einer umlaufenden Fügestelle miteinander gefügt sind, wobei die Fügestelle ein Aktivhartlot aufweist. Ein gängiger keramischer Werkstoff für die Messmembranen und den Grundkörper umfasst Korund wobei als Aktivhartlot insbesondere ein Zr₆₃Ni₂₂Ti₁₅-Aktivhartlot verwendet wird.

Das Dokument EP 0 490 807 offenbart ein Verfahren zum Herstellen einer Druckmesszelle, welche einen keramischen Grundkörper und eine keramische Messmembran aufweist, wobei die Messmembran mittels eines Aktivhartlots und mit dem Grundkörper druckdicht gefügt ist, wobei das Verfahren umfasst:
Bereitstellen des Grundkörpers und der Messmembran und des Aktivhartlots;
Positionieren des Aktivhartlots zwischen dem Grundkörper und der Messmembran;
Schmelzen des Aktivhartlots und
Erstarrenlassen des Aktivhartlots durch Abkühlen.

Zum Fügen der Komponenten werden diese in der gewünschten Position zueinander in einem Hochvakuumofen angeordnet und geheizt, bis das Aktivhartlot bei 900 °C aufschmilzt und aktiv eine Verbindung mit der Keramik eingeht. Nach dem Schmelzvorgang wird die Druckmesszelle im Ofen unter Vakuum und ggf. zeitweise unter Zusatz von Schutzgas abgekühlt.

Aus kalorimetrischen Messungen am Lot ist bekannt, dass die Liquidustemperatur bei ca. 860 °C und die Solidustemperatur bei ca. 800 °C liegen. Die Auskristallisation von Phasen aus der Schmelze findet in diesem Temperaturbereich statt. Weitere Phasenbildungen sind unterhalb der Solidustemperatur möglich. Es ist bekannt, dass sich immer die gleichen thermodynamischen Phasen ausbilden.

Untersuchungen mit Reflektions-Elektronen-Mikroskopie (REM) an Schnitten durch Fügestellen haben ergeben, dass unterschiedliche segregierte Phasen innerhalb der Fügestelle große Bereiche einnehmen. Da es sich um Phasen mit unterschiedlicher Zusammensetzung handelt, ist davon auszugehen, dass sie sich in Eigenschaften, wie dem thermischen Ausdehnungskoeffizienten, und der Druck- bzw. Zugfestigkeit, unterscheiden. Hierdurch kann die Qualität der Fügestelle hinsichtlich Festigkeit, Dichtigkeit, und/oder Fertigungsausbeute beeinträchtigt werden.

Es ist daher die Aufgabe der Erfindung, eine Druckmesszelle mit einer verbesserten Fügestelle und ein Verfahren zu ihrer Herstellung anzugeben.

Die Aufgabe wird erfindungsgemäß gelöst durch das Verfahren gemäß dem unabhängigen Patentanspruch 1 und die Druckmesszelle gemäß dem unabhängigen Patentanspruch 14.

Das erfindungsgemäße Verfahren zum Herstellen einer Druckmesszelle, welche einen keramischen Grundkörper und eine keramische Messmembran aufweist, wobei die Messmembran mittels eines Aktivhartlots mit dem Grundkörper druckdicht gefügt ist, umfasst: Bereitstellen des Grundkörpers und der Messmembran und des Aktivhartlots; Positionieren des Aktivhartlots zwischen dem Grundkörper und der Messmembran; Schmelzen des Aktivhartlots durch Bestrahlen des Aktivhartlots mittels eines Lasers, wobei das Bestrahlen des Aktivhartlots durch die Messmembran hindurch erfolgt; und Erstarrenlassen des Aktivhartlots durch Abkühlen.

In einer Weiterbildung der Erfindung wird das geschmolzene Aktivhartlot nicht mehr als 1 Minute, insbesondere nicht mehr als 30 Sekunden, vorzugsweise nicht mehr als 15 Sekunden durch Bestrahlen bei oder oberhalb der Liquidus-Temperatur gehalten.

Die Liquidus-Temperatur ist die Temperatur, oberhalb derer das Aktivhartlot vollständig verflüssigt ist, also keine festen Phasen mehr aufweist.

In einer Weiterbildung der Erfindung erfolgt das Erstarrenlassen des Aktivhartlots durch Abkühlen bis zur Solidus-Temperatur mit einer mittleren Kühlrate von nicht weniger als 20 K/Minute, insbesondere nicht weniger als 40 K/Minute, vorzugsweise nicht weniger als 1 K/Sekunde, und besonders bevorzugt nicht weniger als 2 K/Sekunde.

Die Solidus-Temperatur ist die Temperatur, unterhalb derer das Aktivhartlot keine flüssige Phase aufweist.

In einer Weiterbildung der Erfindung erfolgt das weitere Abkühlen bis zu einer Temperatur von 100K unterhalb der Solidus-Temperatur, vorzugsweise 200K unterhalb der Solidus-Temperatur mit einer mittleren Rate von nicht weniger als 20 K/Minute, insbesondere nicht weniger als 40 K/Minute vorzugsweise nicht weniger als 1 K/Sekunde, und besonders bevorzugt nicht weniger als 2 K/Sekunde.

In einer Weiterbildung der Erfindung wird das Abkühlen durch Beaufschlagen der Druckmesszelle mit einem Edelgas, insbesondere Argon unterstützt.

Die Erfindung geht von der Überlegung aus, dass durch die lokale Erwärmung des Aktivhartlots durch Bestrahlung mit dem Laser der Wärmeeintrag so gering ist, dass eine schnelle Abkühlung aus der Schmelze erfolgen kann. Damit steht dann weniger Zeit für Keimbildung und Wachstum segregierter Phasen in der Fügestelle zur Verfügung, so dass die segregierten Phasen, sofern überhaupt vorhanden, kleiner und damit weniger bestimmend für das Verhalten der Fügestelle sind.

In einer Weiterbildung der Erfindung erfolgt das Bestrahlen des Aktivlots mittels eines Lasers bei einer Wellenlänge, bei welcher der keramische Werkstoff der Messmembran nicht oder allenfalls vernachlässigbar absorbiert, wobei die Wellenlänge insbesondere im sichtbaren Bereich liegt. Eine vernachlässigbare Absorption liegt im Sinne der Erfindung insbesondere dann vor, wenn mindestens 90 %, insbesondere mindestens 95 % der Intensität des an einer oberen Oberfläche der Messmembran in die Messmembran eintretenden Lichts, eine zur oberen Oberfläche parallele untere Oberfläche der Messmembran erreicht, wobei die untere Oberfläche insbesondere jene ist, die das Aktivhartlot kontaktiert.

In einer Weiterbildung der Erfindung werden der Grundkörper und die Messmembran ganz, zumindest aber lokal im Bereich der Fügestelle, geheizt auf eine Temperatur, die nicht mehr als 200 K, insbesondere nicht mehr als 100 K und bevorzugt nicht mehr als 50 K unterhalb der Solidus-Temperatur des Aktivhartlots liegt.

Der Grundkörper und die Messmembran sollten aber keinesfalls bis zur Liquidus-Temperatur des Aktivhartlots und gemäß einer Weiterbildung der Erfindung nicht über die Solidus-Temperatur des Aktivhartlots vorgeheizt werden.

In einer Weiterbildung der Erfindung erfolgt das Vorheizen mittels eines Lasers in einem Wellenlängenbereich, in dem der keramische Werkstoff des Grundkörpers bzw. der Messmembran absorbiert, insbesondere mittels eines Nd-YAG-Lasers oder eines CO₂-Lasers.

In einer Weiterbildung der Erfindung erfolgt das Vorheizen mittels eines Ofens, in dem die Komponenten angeordnet sind.

In einer Weiterbildung der Erfindung erfolgen das Schmelzen und das Erstarrenlassen des Aktivhartlots zumindest zeitweise unter Vakuum und/oder Schutzgas, insbesondere Argon.

In einer Weiterbildung der Erfindung umfasst der keramische Werkstoff des Grundkörpers und der Messmembran Korund.

Für die Messmembran kann dabei insbesondere Korund mit höherer Reinheit und mit einer höheren Bruchfestigkeit verwendet werden als für den Grundkörper. In einer Weiterbildung der Erfindung umfasst die Messmembran eine hochreine Al2O3-Keramik, welche sich insbesondere durch eine sehr geringe Dichte von Streuzentren im sichtbaren Wellenlängenbereich auszeichnet, so dass der keramische Werkstoff der Messmembran in diesem Wellenlängenbereich im Wesentlichen transparent ist. Damit kann das kontrollierte Bestrahlen des Aktivhartlots durch die Messmembran besonders einfach erfolgen.

Ein entsprechender, als Membranmaterial geeigneter keramischer Werkstoff ist beispielsweise in der Patentschrift DE 10 2008 036 381 B3 offenbart.

Gemäß einer Weiterbildung der Erfindung kann das Material der Messmembran eine Biegebruchspannung σ_{c} aufweisen, deren Verteilung F(σ_{c}) durch die Weibull-Parameter σ₀ ≥ 500 MPa, insbesondere σ₀ ≥ 650 MPa, bevorzugt σ₀ ≥ 800 MPa, und m ≥ 24 gegeben ist, und einer mittleren Korngröße des gesinterten Materials von nicht mehr als 2 µm, vorzugsweise nicht mehr als 1,75 µm und besonders bevorzugt nicht mehr als 1,5 µm.

Gerade für diese hochfesten Messmembranen ist das erfindungsgemäße Verfahren zum Fügen der Messmembran von großer Relevanz, da durch die Erfindung die Festigkeit der Fügestelle verbessert wird, und damit eine Entsprechung zwischen Messmembran und Fügestelle gegeben ist.

Die erfindungsgemäße Druckmesszelle, welche insbesondere erhältlich ist nach dem erfindungsgemäßen Verfahren, umfasst einen keramischen Grundkörper und eine keramische Messmembran, wobei die Messmembran mit einer Oberfläche des Grundkörpers unter Bildung einer Messkammer zwischen der Oberfläche des Grundkörpers und der Messmembran mittels einer umlaufenden Fügestelle verbunden ist, wobei die Fügestelle ein Aktivhartlot aufweist, wobei, sofern die Fügestelle überhaupt segregierte, insbesondere granular segregierte Phasen des Aktivhartlots enthält, diese insbesondere granular segregierten Phasen eine maximale Erstreckung in einer Richtung senkrecht zur Oberfläche des Grundkörpers von nicht mehr als 4 µm, insbesondere nicht mehr als 2 µm und bevorzugt nicht mehr als 1 µm aufweisen.

Die keramische Messmembran und der keramische Grundkörper der Druckmesszelle weisen erfindungsgemäß Korund auf, wobei das Aktivhartlot ein Zr-Ni-Ti-Aktivhartlot oder ein Cu-Ti-Zr-Ni-Aktivhartlot ist.

In einer derzeit bevorzugten Ausgestaltung des bereitgestellten Zr-Ni-Ti-Aktivhartlots weist dieses die folgende Zusammensetzung auf: Zr 63 %, Ni 22 %; und Ti 15%. In einer derzeit bevorzugten Ausgestaltung des bereitgestellten Cu-Ti-Zr-Ni-Aktivhartlots weist dieses die folgende Zusammensetzung auf: Cu 47 %, Ti 34 %, Zr 11 %, Ni 8 %. Alle %-Angaben in diesem Absatz sind Atom-%.

Die erfindungsgemäße Druckmesszelle kann eine Absolut-, Relativ- oder Differenzdruckmesszelle sein.

Die erfindungsgemäße Druckmesszelle umfasst weiterhin einen Wandler zum Wandeln einer druckabhängigen Verformung der Messmembran in ein Signal, insbesondere ein elektrisches oder optisches Signal. Derzeit sind kapazitive Wandler als elektrische Wandler bevorzugt, wobei hierzu die Messmembran und der Grundkörper an den die Messkammer begrenzenden Oberflächen Elektroden aufweisen, und wobei die Kapazität zwischen den Elektroden druckabhängig ist.

Die Erfindung wird nun anhand der Zeichnungen erläutert. Es zeigt:
- Fig. 1:: einen Längsschnitt durch eine gattungsgemäße Druckmesszelle;
- Fig. 2:: einen Längsschnitt durch eine Fügestelle einer gattungsgemäßen Druckmesszelle; und
- Fig. 3:: eine Darstellung einer erfindungsgemäßen Druckmesszelle während der Herstellung nach dem erfindungsgemäßen Verfahren.

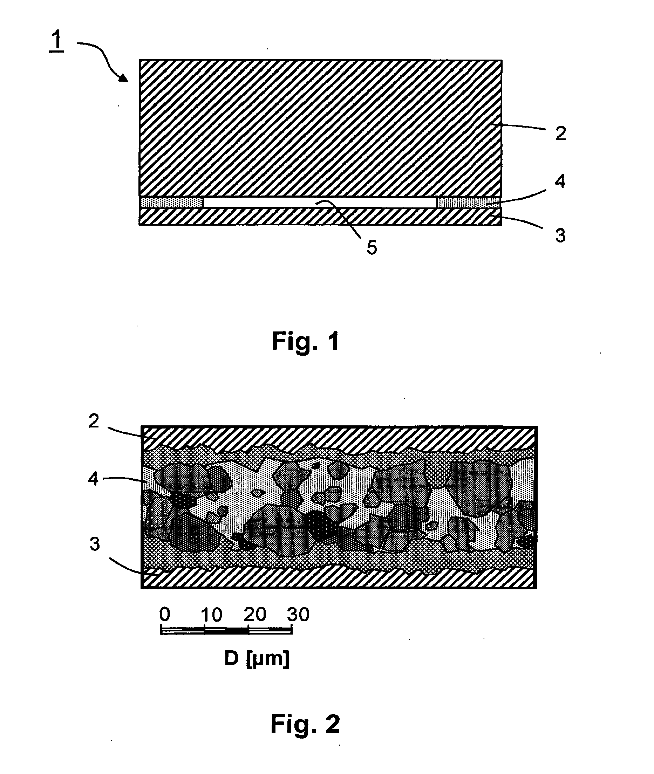

Die in Fig 1 dargestellte keramische Druckmesszelle 1 umfasst einen zylindrischen Grundkörper 2 aus Korund mit einem Durchmesser von beispielsweise 1 bis 7 cm und einer Höhe von 3 mm bis 3 cm. Mit dem Grundkörper ist eine Messmembran 3 aus hochreinem Korund über eine ringförmig umlaufende Fügestelle 4 druckdicht gefügt, wobei die Fügestelle 4 ein Aktivhartlot, insbesondere ein Zr-Ni-Ti-Aktivhartlot aufweist. Über die Höhe der Fügestelle 4 ist ein Abstand zwischen der Messmembran und dem Grundkörper vorgegeben, wobei dieser Abstand beispielsweise 10 µm bis 80 µm betragen kann. Die Breite der ringförmigen Fügestelle 4, also die Differenz zwischen Innenradius und Außenradius, beträgt einige wenige mm. Zwischen der Messmembran 3 und dem Grundkörper 2 ist eine von der Fügestelle 4 umschlossene Messkammer 5 gebildet, wobei die Druckmessung gegen den Druck in der Messkammer erfolgt, wobei zu messende Druck auf die der Messkammer 5 abgewandte Außenseite der Messmembran einwirkt. Die Stärke der Messmembran hängt von ihrem Durchmesser und dem angestrebten Messbereich ab. Sie kann beispielsweise 50 µm bis 3 mm betragen.

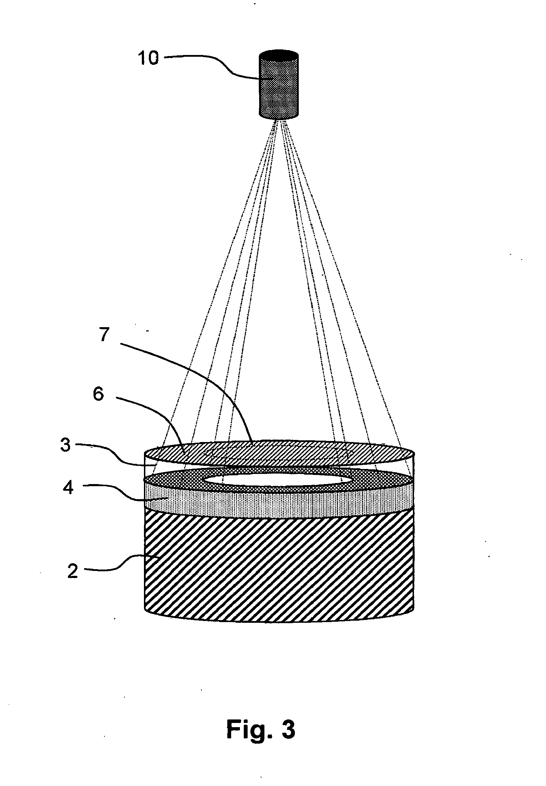

Fig 2. stellt eine schematische Detailansicht eines Längsschnitts durch eine Fügestelle mit einer Stärke von etwa 30 µm dar, wie sie bei einer gattungsgemäßen Druckmesszelle vorliegt. Die Zeichnung ist anhand einer REM-Aufnahme erstellt. Zwischen dem Grundkörper 2 und der Messmembran 3 zeigt die Fügestelle 4, unterschiedliche Strukturen, von denen einige granular segregierte Phasen mit einem Durchmesser von mehr als 10 µm aufweisen. Die unterschiedlichen Schraffuren sind nicht eindeutig definierten Phasen zuzuordnen, sie sollen lediglich zeigen, dass eine Vielzahl granular segregierter Phasen in einer vermutlich amorphen Matrix vorliegt. Die dargestellte Größenverteilung entspricht unmittelbar der Beobachtung. Um die Zeit zur Keimbildung und zum Wachstum der segregierten Phasen zu verkürzen, wird die Druckmesszelle nach dem erfindungsgemäßen Verfahren gefertigt, wie nun anhand von Fig. 3 erläutert wird.

Auf den Grundkörper 2 aus Korund wird ein Aktivhartlotring 4 angeordnet, wobei der Ring vorzugsweise als Lotformteil aufgelegt wird. Gemäß einer Weiterbildung der Erfindung kann der Ring aber auch zumindest Anteilig durch Gasphasenabscheidung auf dem Grundkörper 2bereitgestellt werden.

Auf den Lotring 4 wird dann eine Messmembran 3 aus hochreinem Korund aufgelegt, wobei die Messmembran 3 im sichtbaren Spektralbereich erstens kaum absorbiert und zweitens kaum Streuzentren aufweist.

Das Aktivhartlot 4 wird durch die Messmembran 3 hindurch von der Oberseite der Druckmesszelle her mit einem CO₂-Laser oder einem anderen geeigneten Laser 10 bestrahlt, wobei vorzugsweise nur ein äußerer Randbereich 6 der Stirnseite der Messmembran außerhalb einer Konturlinie 7 bestrahlt wird, wobei die Konturlinie 7 durch den Innenradius des Aktivhartlotrings 4 definiert ist, und wobei auf den äußeren Randereich 6 der Messmembran 3 treffende Strahlen des Lasers 10, durch die Messmembran 3 auf das Aktivhartlot 4 treffen, um dieses zu erwärmen.

Der Laserstrahl kann insbesondere in einem Raster bewegt und/oder gepulst werden.

Die Temperatur des Aktivhartlots kann insbesondere pyrometrisch überwacht werden.

Der Grundkörper und die Messmembran können unabhängig von dem Bestrahlen des Aktivhartlots mit einem Nd-YAG-Laser o.ä. auf eine Temperatur nahe der Solidus-Temperatur des Aktivhartlots erwärmt werden. Die Überwachung der Grundkörpertemperatur und der Messmembrantemperatur kann ebenfalls pyrometrisch erfolgen.

Eine Erwärmung des Grundkörpers und der Messmembran auf beispielsweise die Solidus-Temperatur des Aktivhartlots führt dazu, dass beim Erstarren des Aktivhartlots die mechanischen Spannungen zwischen Lot und Keramikkomponenten begrenzt werden.

Nachdem das Aktivhartlot die Liquidus-Temperatur erreicht hat, und das Lot aufgeschmolzen ist, kann die Abkühlung beginnen. Die aufgrund der gegenüber dem Stand der Technik geringeren eingetragenen Wärmemengen schneller erfolgen kann. Damit werden die Temperaturbereiche, in denen Keimbildung und Wachstum von segregierenden Phasen erfolgen kann, schneller durchlaufen. Die Größe solcher segregierten, insbesondere granularen Phasen ist damit erheblich reduziert.

Das Fügen der Messmembran mit dem Grundkörper erfolgt bevorzugt unter Vakuum bei einem Druck von nicht mehr als 5x10⁻⁶ mbar. Zur Kühlung kann Argon in die Vakuumapparatur eingeleitet werden, um die Kühlrate noch zu erhöhen.

## Patentansprüche

1. Verfahren zum Herstellen einer Druckmesszelle (1), welche einen keramischen Grundkörper (2) und eine keramische Messmembran (3) aufweist, wobei die Messmembran (3) mittels eines Aktivhartlots mit dem Grundkörper (2) druckdicht gefügt ist, wobei das Verfahren umfasst:
Bereitstellen des Grundkörpers (1) und der Messmembran (3) und des Aktivhartlots;
Positionieren des Aktivhartlots zwischen dem Grundkörper (1) und der Messmembran (3),
Schmelzen des Aktivhartlots durch Bestrahlen des Aktivhartlots mittels eines Lasers, wobei das Bestrahlen des Aktivhartlots durch die Messmembran hindurch erfolgt; und
Erstarrenlassen des Aktivhartlots durch Abkühlen.

2. Verfahren 1, wobei das geschmolzene Aktivhartlot nicht mehr als 1 Minute, insbesondere nicht mehr als 30 Sekunden, vorzugsweise nicht mehr als 15 Sekunden durch Bestrahlen bei oder der Liquidus-Temperatur gehalten wird.

3. Verfahren nach Anspruch 1 oder 2, wobei das Erstarrenlassen des Aktivhartlots durch Abkühlen bis zur Solidus-Temperatur mit einer mittleren Kühlrate von nicht weniger als 20 K/Minute, insbesondere nicht weniger als 40 K/Minute vorzugsweise nicht weniger als 1 K/Sekunde, und besonders bevorzugt nicht weniger als 2 K/Sekunde erfolgt.

4. Verfahren nach Anspruch 3, wobei das weitere Abkühlen bis zu einer Temperatur von 100K unterhalb der Solidus-Temperatur, vorzugsweise 200K unterhalb der Solidus-Temperatur mit einer mittleren Rate von nicht weniger als 20 K/Minute, insbesondere nicht weniger als 40 K/Minute, vorzugsweise nicht weniger als 1 K/Sekunde und besonders bevorzugt nicht weniger als 2 K/Sekunde erfolgt.

5. Verfahren nach einem der vorhergehenden Ansprüche, wobei das Abkühlen durch Beaufschlagen des Drucksensors mit einem Edelgas, insbesondere Argon, unterstützt wird.

6. Verfahren nach einem der vorhergehenden Ansprüche, wobei das Bestrahlen des Aktivlots mittels eines Lasers bei einer Wellenlänge erfolgt, bei welcher der keramische Werkstoff der Messmembran nicht absorbiert oder allenfalls vernachlässigbar absorbiert, wobei die Wellenlänge insbesondere im sichtbaren Bereich liegt.

7. Verfahren nach einem der vorhergehenden Ansprüche, wobei der Grundkörper (2) und die Messmembran (3) zumindest lokal im Bereich der Fügestelle geheizt werden auf eine Temperatur, die nicht mehr als 200 K, insbesondere nicht mehr als 100 K und bevorzugt nicht mehr als 50 K unterhalb der Solidus-Temperatur des Aktivhartlots liegt.

8. Verfahren nach Anspruch 7, wobei das Vorheizen mittels eines Lasers in einem Wellenlängenbereich erfolgt, in dem der keramische Werkstoff des Grundkörpers bzw. der Messmembran absorbiert, insbesondere mittels eines Nd-YAG-Lasers oder eines CO₂-Lasers.

9. Verfahren nach Anspruch 7 oder 8, wobei das Vorheizen mittels eines Ofens erfolgt, in dem die Komponenten angeordnet sind.

10. Verfahren nach einem der vorhergehenden Ansprüche, wobei das Schmelzen und das Erstarrenlassen des Aktivhartlots zumindest zeitweise unter Vakuum und/oder Schutzgas, insbesondere Argon erfolgen.

11. Verfahren nach einem der vorhergehenden Ansprüche, wobei der keramische Werkstoff des Grundkörpers (2) und der Messmembran (3) Korund umfasst.

12. Verfahren nach einem der vorhergehenden Ansprühe, wobei der keramische Werkstoff der Messmembran (3) im Wesentlichen transparent ist.

13. Druckmesszelle (1), insbesondere erhältlich nach einem Verfahren der vorhergehenden Ansprüche, umfassend einen keramischen Grundkörper (2) und eine keramische Messmembran (3), wobei die Messmembran (3) mit einer Oberfläche des Grundkörpers (2) unter Bildung einer Messkammen (5) zwischen der Oberfläche des Grundkörpers (2) und der Messmembran (3) mittels einer umlaufenden Fügestelle (4) verbunden ist, wobei die Fügestelle (4) ein Aktivhartlot aufweist, **dadurch gekennzeichnet, dass**, sofern die Fügestelle (4) überhaupt segregierte, insbesondere granular segregierte Phasen des Aktivhartlots enthält, diese segregierten Phasen eine maximale Erstreckung in einer Richtung senkrecht zur Oberfläche des Grundkörpers von nicht mehr als 4 µm, insbesondere nicht mehr als 2 µm und bevorzugt nicht mehr als 1 µm aufweisen.

14. Druckmesszelle nach Anspruch 14, wobei die keramische Messmembran (3) und der keramische Grundkörper (2) Korund aufweisen, und wobei das Aktivhartlot ein Zr-Ni-Ti-Aktivhartlot oder ein Cu-Ti-Zr-Ni-Aktivhartlot ist.

## Claims

1. Procedure designed for the manufacturing of a pressure measuring cell (1), said cell having a ceramic meter body (2) and a ceramic measuring membrane (3), wherein the measuring membrane (3) is joined in a pressure-tight manner to the meter body (2) by means of an active brazing alloy, said procedure comprising:
The provision of the meter body (2), the measuring membrane (3) and the active brazing alloy;
The positioning of the active brazing alloy between the meter body and the measuring membrane (3),
The melting of the active brazing alloy by irradiating the active brazing alloy with a laser, wherein the irradiation of the active brazing alloy takes place through the measuring membrane; and
The solidification of the active brazing alloy through cooling.

2. Procedure 1, wherein the melted active brazing alloy is maintained by irradiation near or at the liquidus temperature for a maximum of one minute, particularly for a maximum of 30 seconds, and preferably for a maximum of 15 seconds.

3. Procedure as claimed in Claim 1 or 2, wherein the solidification of the active brazing alloy by cooling to the solidus temperature is performed at an average cooling rate of not less than 20 K/minute, particularly not less than 40 K/minute, preferably not less than 1 K/second and most preferably not less than 2 K/second.

4. Procedure as claimed in Claim 3, wherein the further cooling to a temperature of 100 K below the solidus temperature, preferably 200 K below the solidus temperature, takes place at an average rate of not less than 20 K/minute, particularly not less than 40 K/minute, preferably not less than 1 K/second and most preferably not less than 2 K/second.

5. Procedure as claimed in one of the previous claims, wherein the cooling is supported by exposing the pressure sensor to a noble has, notably argon.

6. Procedure as claimed in one of the previous claims, wherein the irradiation of the active brazing alloy using a laser is performed at a wavelength at which the ceramic material of the measuring membrane does not absorb, or at most absorbs to a negligible degree, wherein the wavelength is particularly in the visible range.

7. Procedure as claimed in one of the previous claims, wherein the meter body (2) and the measuring membrane (3) are heated at least locally in the area of the junction to a temperature that is not more than 200 K, preferably not more than 100 K and preferably not more than 50 K below the solidus temperature of the active brazing alloy.

8. Procedure as claimed in Claim 7, wherein preheating using a laser is performed in a wavelength range in which the ceramic material of the meter body or the measuring membrane absorbs, particularly using an Nd:YAG laser or a CO₂ laser.

9. Procedure as claimed in Claim 7 or 8, wherein preheating is performed using a furnace in which the components are arranged.

10. Procedure as claimed in one of the previous claims, wherein the melting and solidification of the active brazing alloy at least partially take place under vacuum and/or under shielding gas.

11. Procedure as claimed in one of the previous claims, wherein the ceramic material of the meter body (2) and the measuring membrane (3) comprises corundum.

12. Procedure as claimed in one of the previous claims, wherein the ceramic material of the measuring membrane (3) is essentially transparent.

13. Pressure measuring cell (1), particularly obtainable following a procedure with the previous claims, comprising a ceramic meter body (2) and a ceramic measuring membrane (3), wherein the measuring membrane (3) is connected by means of a circumferential joint (4) to a surface of the meter body (2), with the formation of a measuring chamber (5) between the surface of the meter body (2) and the measuring membrane (3), wherein the joint (4) has an active brazing alloy, **characterized in that** if the joint has any segregated phases of the active brazing alloy, particularly granularly segregated phases, these segregated phases extend for no more than 4 µm, particularly no more than 2 µm and preferably no more than 1 µm in a direction perpendicular to the surface of the meter body.

14. Pressure measuring cell as claimed in Claim 13, wherein the ceramic measuring cell (3) and the ceramic meter body (2) feature corundum, and wherein the active brazing alloy is a Zr-Ni-Ti active brazing alloy or a Cu-Ti-Zr-Ni active brazing alloy.

## Revendications

1. Procédé destiné à la fabrication d'une cellule de mesure de pression (1), laquelle comporte un corps de base (2) en céramique et une membrane de mesure (3) en céramique, la membrane de mesure (3) étant jointe de façon étanche à la pression au corps de base (2) au moyen d'une brasure active, lequel procédé comprend :
La mise à disposition du corps de base (2), de la membrane de mesure (3) et de la brasure active ;
Le positionnement de la brasure active entre le corps de base (2) et la membrane de mesure (3),
La fusion de la brasure active par l'irradiation de la brasure active au moyen d'un dispositif laser, l'irradiation de la brasure active s'effectuant à travers la membrane de mesure ; et
La solidification par refroidissement de la brasure active.

2. Procédé 1, pour lequel la brasure active fondue est maintenue par irradiation près de ou à la température de liquidus pendant un maximum d'une minute, notamment pendant un maximum de 30 secondes, de préférence pendant un maximum de 15 secondes.

3. Procédé selon la revendication 1 ou 2, pour lequel la solidification par refroidissement de la brasure active jusqu'à la température de solidus est réalisée à une vitesse de refroidissement d'au moins 20 K/minute, notamment d'au moins 40 K/minute, de préférence d'au moins 1 K/seconde et particulièrement de préférence d'au moins 2 K/seconde.

4. Procédé selon la revendication 3, pour lequel le refroidissement supplémentaire jusqu'à une température de 100 K sous la température de solidus, de préférence jusqu'à une température de 200 K sous la température de solidus, s'effectue à une vitesse de refroidissement d'au moins 20 K/minute, notamment d'au moins 40 K/minute, de préférence d'au moins 1 K/seconde et particulièrement de préférence d'au moins 2 K/seconde.

5. Procédé selon l'une des revendications précédentes, pour lequel le refroidissement est facilité par l'exposition du capteur de pression à un gaz noble, notamment de l'argon.

6. Procédé selon l'une des revendications précédentes, pour lequel l'irradiation de la brasure active au moyen d'un dispositif laser est réalisée à une longueur d'onde, à laquelle le matériau céramique de la membrane de mesure n'absorbe pas, ou absorbe tout au plus de façon négligeable les rayons, la longueur d'onde se situant notamment dans la plage visible.

7. Procédé selon l'une des revendications précédentes, pour lequel le corps de base (2) et la membrane de mesure (3) sont échauffés au moins localement dans la zone du point de jonction à une température, qui n'est pas inférieure de plus de 200 K, notamment pas inférieure de plus de 100 K et de préférence pas inférieure de plus de 50 K à la température de solidus de la brasure active.

8. Procédé selon la revendication 7, pour lequel le préchauffage au moyen du dispositif laser est réalisé dans une plage de longueurs d'onde, dans laquelle le matériau céramique du corps de base ou de la membrane de mesure absorbe les rayons, notamment au moyen d'un laser Nd:YAG ou d'un laser CO₂.

9. Procédé selon la revendication 7 ou 8, pour lequel le préchauffage s'effectue au moyen d'un four, dans lequel les composants sont disposés.

10. Procédé selon l'une des revendications précédentes, pour lequel la fusion et la solidification de la brasure active s'effectuent au moins temporairement sous vide et/ou sous gaz protecteur, notamment de l'argon.

11. Procédé selon l'une des revendications précédentes, pour lequel le matériau céramique du corps de base (2) et de la membrane de mesure (3) présente du corindon.

12. Procédé selon l'une des revendications précédentes, pour lequel le matériau céramique de la membrane de mesure (3) est pour l'essentiel transparent.

13. Cellule de mesure de pression, notamment réalisable d'après un procédé des revendications précédentes, comprenant un corps de base (2) en céramique et une membrane de mesure (3) en céramique, la membrane de mesure (3) en céramique étant reliée avec une surface du corps de base (2) en formant une chambre de mesure (5) entre la surface du corps de base (2) et la membrane de mesure (3) au moyen d'une zone de jonction périphérique, la zone de jonction (4) présentant une brasure active
**caractérisée en ce que**, dans la mesure où la zone de jonction (4) contient au juste des phases ségrégées, notamment des phases ségrégées de façon granulaire, de la brasure active, ces phases ségrégées présentent une étendue maximale, dans une direction perpendiculaire à la surface du corps de base, d'un maximum de 4 µm, notamment d'un maximum de 2 µm et de préférence d'un maximum de 1 µm.

14. Cellule de mesure de pression selon la revendication 13, pour laquelle la membrane de mesure (3) et le corps de base (2) en céramique présentent du corindon, et pour laquelle la brasure active est une brasure active Zr-Ni-Ti ou une brasure active Cu-Ti-Zr-Ni.
